# EUROPÄISCHE PATENTSCHRIFT

(11) **EP 2 981 486 B1**
(45) Veröffentlichungstag und Bekanntmachung des Hinweises auf die Patenterteilung: **14.06.2017**
(21) Anmeldenummer: 14718320.6
(22) Anmeldetag: 01.04.2014
(51) Int. Cl.: B65D 90/00

(54) **CONTAINERSTAUSYSTEM**
CONTAINER STORAGE SYSTEM
SYSTÈME DE RANGEMENT DE CONTENEURS

(30) Priorität: 02.04.2013 DE 102013005636
(43) Veröffentlichungstag der Anmeldung: 10.02.2016
(73) Patentinhaber: Köbeck GbR, 84568 Pleiskirchen (DE)
(72) Erfinder: BECK, Michael, 84513 Töging am Inn (DE)
(74) Vertreter: Samson & Partner Patentanwälte mbB
(86) Internationale Anmeldenummer: PCT/EP2014/000870
(87) Internationale Veröffentlichungsnummer: WO 2014/161655

(56) Entgegenhaltungen:
- AU-A1- 2010 200 683
- DE-U1- 29 708 856
- FR-A1- 2 967 982
- US-A1- 2004 239 147
- US-A1- 2010 122 981

## Beschreibung

Die Erfindung betritt ein Containerstausystem zum Transport und/oder zur Sicherung von Beförderungsgut in einem Container und/oder zur Unterteilung des Containers, wobei der Container Seitenwände aus Trapezblech mit vertikalen Sicken aufweist.

In diesen Unterlagen beziehen sich Lagebezeichnungen, wie "oben", "oben unten", "vorne", "hinten", etc. stets auf die Sicht eines Betrachters, der vor einem Container steht und in den Container hineinschaut.

Trapezblech im Sinne der vorliegenden Erfindung umfasst im Allgemeinen im Querschnitt trapezähnlich gekantete Profilbleche. Solche Trapezbleche finden überwiegend im Industriebau Anwendung und vor allem aber für die Ausgestaltung von Wand- und Seitenkonstruktionen bei Containern. Die erhöhten Stellen der Trapezbleche werden üblicherweise als Stege bezeichnet und die dazwischen liegenden Vertiefungen als Sicken. Container im Sinne der Erfindung umfasst allgemein Großraumbehälter zur Lagerung und zum Transport von Beförderungsgütern. Dabei kann es sich beispielsweise um ISO-Container handeln, die insbesondere als 40 Fuß Container mit den Maßen 12,192 x 2,438 x 2,591 m beispielsweise als Seefrachtcontainer nach der ISO-Norm 668 Verwendung finden. Ebenso umfasst Container auch sogenannte LKW-Wechselbrücken oder aber auch andere Laderäume, die entsprechende Trapezblechseitenwände umfassen. Solche Container können entsprechend auf Schiffen, der Eisenbahn oder mit dem LKW befördert und umgeschlagen werden.

### Stand der Technik

Vorrichtungen und Systeme zum Transport und/oder zur Sicherung von Beförderungsgut in einem Container und/oder zur Unterteilung eines Containers sind in unterschiedlichen Ausführungen bekannt und haben jeweils die Aufgabe, Beförderungsgut beim Transport in einem Container zu sichern und/oder zu lagern.

Aus dem Stand der Technik sind ferner verschiedene Vorrichtungen und Materialien bekannt, die dem Schutz und dem Transport der Ladung dienen. Diese Materialien werden auch als sogenannte Separier- oder Garniermaterialien oder kurz Garnier bezeichnet. Garniermaterialien umfasst dabei sämtliche nicht fest mit einer Beförderungseinheit, dem Ladegut oder seiner Verpackung verbundene Materialien, die dem Schutz der Ladung dienen. Dazu zählen unter anderem Stauholz, Balken, Bogen, Bretter, Keile, Sperrholz- und Hartfaserplatten, Planen, Kunststoffe und Metallfolien, Karton und Pappen etc.

Ob solche Materialien den Garnier- oder Separier- oder den Ladungssicherungsmaterialien zuzurechnen sind, wird nicht vom Material sondern von dessen Verwendung bestimmt. Separieren meint dabei das auffällige Trennen von Beförderungsgut oder einzelnen Ladungspartien innerhalb eines Containers. Insbesondere sofern gleichartige Ladungen in einem Container für verschiedene Empfänger bestimmt sind, ist Separieren insoweit von Bedeutung, damit die Beförderungsgüter nicht verwechselt werden und/oder spätere Sortierarbeiten vermieden werden. Als Separiermaterialien kommen zum Garniermaterial ähnliche Materialien zum Einsatz. Die Garnier- und Separiermaterialien werden auch über geeignete Befestigungsmittel, wie beispielsweise Schrauben, Bolzen und ähnliches im oder am Container sowie im oder am Ladungsgut bzw. Beförderungsgut befestigt.

Ferner ist es beim Transport von Beförderungsgut in einem Container erforderlich, Staulücken zwischen Containerinnenwand und Beförderungsgut und den Beförderungsgütern untereinander zu schließen, da insbesondere beim Transport auf dem Seeweg die Container verschiedensten Schaukelbewegungen und Umwelteinflüssen ausgesetzt sind, so dass dies bei ungesichertem Beförderungsgut zu Ladungsverschiebung und damit zu Beschädigungen des Beförderungsguts führen kann.

Auch ist es beispielsweise bekannt, Hölzer verschiedener Abmessungen, beispielsweise Kanthölzer oder ähnliches, innerhalb eines Containers zu verspreizen oder einzuspreizen. Solche Hölzer können zwar Beförderungsgut zum Transport sichern, jedoch kann das Verspreizen zu Beschädigungen des Containers führen. Auch können verspreizte/eingespreizte Hölzer während des Transportes brechen oder herausrutschen, beispielsweise wenn von außen Kräfte auf den Container wirken, beispielsweise durch Schläge beim Aufsetzen auf einem Schiff oder einem LKW oder bei einem Zusammenstoßen mit einem anderen Container oder anderen Ladungsträgereinheiten. Auch können Beschädigungen von Sicherungshölzern auftreten, wenn beispielsweise ein Container sich kurzfristig beim Anheben aufgrund eventuell ungleichmäßiger Gewichtsverteilung im Containerinnenraum verdreht und/oder verbiegt.

Somit sind bekannte Lösungen oftmals bei Montage der entsprechenden Sicherungsmaterialien mit einem hohen Zeitaufwand verbunden. Auch sind bekannte Ausführungen aufwendig in der Konstruktion und umfassen zahlreiche Bauteile, die insbesondere verschleißanfällig sind. Zusätzlich sind bekannten Vorrichtungen und Materialien nicht zwingend wieder verwendbar.

FR 2 967 982 A1 offenbart ein Containerstausystem zum Transport von Beförderungsgut in einem Container und/oder zur Unterteilung des Containers, wobei der Container Seitenwände aus Trapezblech mit vertikalen Sicken aufweist.

US 2010/0 147 728 A1 D2 offenbart eine Energieaufnahmevorrichtung für Seecontainer, genauer eine Ladungssicherungsvorrichtung, die möglicherweise teilweise an die zu transportierenden Güter anpassbar ist. Das Ladungsgut sichernde Querriegel werden herzu vertikal in seitliche Führungsschienen eingesetzt, um ein Verrutschen des zu transportierenden Ladungsgutes zu verhindern.

US 2004/239147 A1 offenbart ein Containerstausystem mit zwei seitlichen Stützen, die senkrecht in gegenüberliegenden Sicken wenigstens zweier gegenüberliegender Seitenwände des Containers anordenbar sind. Querriegel sind nicht vorgesehen.

DE 297 08 856 U1 betrifft eine Anordnung zur Ladungssicherung auf einem Fahrzeug. Dabei sind unter anderem Querstangen vorgesehen, die sich zwischen den Trägern erstrecken und dort einsetzbar sind. Die jeweiligen Querträger werden über Stifte in den Stützen festgelegt.

AU 2010/200 683 A1 offenbart ein weiteres Containerstausystem.

### Aufgabe und Lösung der Erfindung

Vor diesem Hintergrund ist es Aufgabe der vorliegenden Erfindung, ein verbessertes Containerstausystem sowie eine Stütze und einen Querriegel für ein solches Containerstausystem bereitzustellen, um obige Nachteile zu überwinden, mindestens aber zu reduzieren.

Diese Aufgabe wird durch den Gegenstand des unabhängigen Anspruchs 1 gelöst.

Das erfindungsgemäße Containerstausystem ist funktionssicher und mit geringem Aufwand werkzeuglos, zusammensetzbar und zerlegbar. So lassen sich mit einfachen Mitteln Beförderungsgut in einem Container sichern und/oder aber auch der Container unterteilen. Das erfindungsgemäße Containerstausystem ist ausgelegt, um Abtrennungen beliebiger Art innerhalb eines Containers in horizontaler wie vertikaler oder auch gleichzeitig in beide Richtungen zu schaffen. Vorteilhaft ist das System somit flexibel an kunden-/produktspezifische Anforderungen anpassbar und vor allem wieder verwendbar.

Die einzelnen Systemkomponenten sind kostengünstig im Erwerb und lassen aufgrund der Wiederverwendbarkeit und ihrer Funktionalität weitere Kostenvorteile entstehen. Insbesondere lässt sich durch die werkzeuglose Zusammensetzung bzw. Zerlegbarkeit eine schnelle und zeitsparende Verladung von Beförderungsgut in Containern ermöglichen. Aufgrund der Wiederverwendbarkeit der einzelnen Systemkomponenten und des Gesamtsystems lässt sich auch ein hoher Nachhaltigkeitsfaktor, insbesondere auf Grund der verwendeten Materialien erzielen.

Zur Montage lassen sich einfach die seitlichen Stützen in jeweils gegenüberliegende Sicken einer Containerwand anordnen bzw. hineinstellen. Die in den Stützen angeordneten bzw. ausgebildeten Ausnehmungen dienen der Aufnahme wenigstens eines Querriegels, der die beiden Stützen miteinander verbindet. Dabei ist das System derart konstruiert, dass sich die Systemkomponenten selbst sichern und in dem Container spannungslos einfügen.

Die erfindungsgemäßen senkrecht stehenden Stützen umfassen wenigstens ein oder mehrere Ausnehmungen, deren Unterseite durch ein Auflager begrenzt ist. Im montierten Zustand liegen dann die Querriegel/- Streben horizontal auf den Auflagern der seitlichen Stützen auf und befinden sich innerhalb der Ausnehmungen. Die Auflager können einstückig mit der jeweiligen Stütze ausgebildet sein, beispielsweise ausgefräst oder anders geeignet bearbeitet sein. Alternativ sind die Auflager in die jeweilige Stütze einsetzbar. Dazu sind sie bevorzugt plattenförmig ausgestaltet.

Die einzelnen Komponenten können aus entsprechend geeigneten Materialien hergestellt sein, beispielsweise aus Holz oder Holzverbundwerkstoffen, wie beispielsweise Stützen aus OSB (Oriented Strand Board). Die Querriegel bzw. Streben können aus Massivholz, beispielsweise als Vierkantholz, hergestellt sein. Ebenso ist es möglich, die Stützen und Querriegel bzw. Streben beispielsweise aus Metall, Kunststoff oder auch anderen Verbundstoffen wie beispielsweise WPC (Wood Polymer Composite) herzustellen, die entsprechend geeignet sind, Anforderungen, Einflüssen und Beanspruchungen innerhalb eines Containers standzuhalten, wobei nachhaltige Werkstoffe/Materialien zu bevorzugen sind. Ebenso lassen sich die Stützen beispielsweise aus in Form gepressten Spänen herstellen. Vorteilhaft sind die Materialstärken/-Querschnitte an die jeweiligen Belastungsanforderungen anpassbar.

Insgesamt ist das erfindungsgemäße Containerstausystem im Vergleich zum bekannten Stand der Technik weniger störungsanfällig und verschleißärmer und erhöht damit die Lebensdauer der beanspruchten Bestandteile sowie des Gesamtsystems. Auch bildet das erfindungsgemäße Containerstausystem vorteilhaft keinen festen Verbund mit dem Container. Es ist grundsätzlich geeignet für eine Verwendbarkeit bei sämtlichen Containern/Laderäumen, die jeweils Trapezblechseitenwände aufweisen. Die werkzeuglose Montier- und Demontierbarkeit ermöglicht insbesondere eine geräuscharme Montage, was wiederum die Ergonomie am Arbeitsplatz erhöht. Zusätzlich wird das Verletzungsrisiko minimiert, da kein Sägen/Bohren/Nageln stattfinden muss. Auch verringert sich vorteilhaft die Gefahr einer Beschädigung des Containers aufgrund einer vorteilhaften Druckverteilung, nämlich insbesondere einer Punktlast auf die jeweiligen Seitenwände. Dadurch lässt sich ein aufwendiges Einspreizen von Kanthölzern wie zuvor im Stand der Technik erwähnt, vermeiden, so dass die Lebensdauer der einzelnen Bestandteile erhöht wird.

Vorzugsweise entspricht beim Containerstausystem die Länge der Stützen teilweise oder nahezu vollständig der Höhe einer Containerseitenwand.

Die Containerseitenwände sind in ein Containergestell eingefügt, so dass die Länge der Stützen im Wesentlichen der Länge der Containerseitenwand entspricht.

Vorteilhaft ist so die wenigstens eine Stütze spannungslos in den Container einsetzbar. Dazu wird er einfach in die ausgewählte Sicke hineingestellt.

Vorzugsweise sind beim Containerstausystem die Abmessungen der Stützen und Querriegel derart geringer als die Innenabmessungen des Containers gewählt, so dass das Containerstausystem spannungslos im Container montierbar ist.

Mit dieser Maßnahme besitzen das Containerstausystem sowie die einzelnen Bestandteile eine gewisse Elastizität und einen Spielraum, um bereits eventuell im Container vorhandene Verformungen, wie beispielsweise Dellen oder Beulen, im Containerinnenraum auszugleichen bzw. aufzunehmen.

Vorzugsweise sind beim Containerstausystem die Außenkonturen der Stützen wenigstens teilweise komplementär zu den Sicken des Containers ausgebildet.

Dabei kann die Außenkontur der jeweiligen Stütze vollflächig an den jeweiligen Sicken anliegen. Ferner kann die Außenkontur der Stützen zusätzlich zu der Innenkontur der Stege angepasst sein. In beiden Fällen verhindern die Stege ein seitliches Verkippen der jeweiligen Stütze. Sofern die Stützen wenigstens der Breite nach den Innenabmessungen der Sicken entsprechen, gewährleisten die Abmessungen der Stützen ein Querschnittsprofil, das ausreichende Stabilität aufweist, um entsprechende Lasten durch das Beförderungsgut aufzunehmen. Vorteilhaft entstehen auch keine Verluste durch diese Ausbildung der Stützen am Laderaum. Durch die breitere Ausführung der Stützen, insbesondere in die Schrägen der Stege, können auch höhere Querschnitte der Querbalken erreicht werden, wodurch die Querbalken größere Lasten tragen können.

Vorzugsweise ist beim Containerstausystem wenigstens eine Ausnehmung in den wenigstens zwei Stützen in der Höhe jeweils variabel ausbildbar oder anordenbar.

Dabei können je nach Kundenwunsch bzw. zu beförderndem Gut eine oder mehrere Ausnehmungen in den jeweiligen Stützen ausgebildet sein oder dort angeordnet werden. Dies gewährleistet eine hohe Flexibilität und Anpassbarkeit des Containerstausystems an das jeweils zu transportierende Beförderungsgut.

Bevorzugt ist beim Containerstausystem wenigstens eine Ausnehmung derart in der Stütze ausgebildet oder angeordnet, dass der Querriegel jeweils diagonal oder schräg von oben in die jeweilige Ausnehmung einsetzbar ist.

Eine solche Ausgestaltung der Ausnehmung ermöglicht eine werkzeuglose Montage und ein einfaches Einschieben bzw. Einsetzen des jeweiligen Querriegels in die Ausnehmung. Beim Containerstausystem ist in der jeweiligen Stütze die wenigstens eine Ausnehmung durch ein Auflagerelement zur Auflage eines Querriegels nach unten begrenzt.

Sofern die wenigstens eine Ausnehmung in der Stütze einstückig ausgebildet ist, beispielsweise ausgefräst ist, bildet automatisch die untere Grenze der Ausfräsung auch die Begrenzung der Ausnehmung. Alternativ kann beispielsweise im Falle einer mehrteiligen Stütze ein zusätzliches Auflagerelement vorgesehen sein, das zwischen zwei Seitenwangen einer Stütze eingesetzt wird, und dadurch die jeweilige Ausnehmung nach unten hin begrenzt.

Bevorzugt ist dabei das Auflagerelement zur Auflage eines Querriegels derart dimensioniert, dass eine ausreichende Last- und Kraftverteilung gewährleistet ist. In einer einfachen Ausgestaltung kann das Auflagerelement beispielsweise plattenförmig ausgestaltet sein und zwischen zwei Seitenwangen eingesetzt sein und dort über entsprechende Verbindungsmittel beispielsweise Nägel oder andere Druckluftgeschosse gesichert sein.

Vorzugsweise ist bei dem Containerstausystem die Oberfläche des Auflagerelements wenigstens teilweise rutschhemmend bearbeitet und/oder mit einem rutschhemmenden Material beschichtet.

Als rutschende Bearbeitung ist beispielsweise eine Aufrauung der Oberfläche möglich oder aber eine rutschhemmende Struktur in das Auflagerelement einbringbar. Alternativ kann beispielsweise eine rutschhemmende Beschichtung vorgesehen sein, die beispielsweise in Form einer Folie oder einer anderen geeigneten elastischen Ausgestaltung auf das Auflagerelement aufgebracht ist.

Vorzugsweise ist beim Containerstausystem die wenigstens eine oder zwei Stützen einstückig ausgebildet.

Eine einstückige Ausbildung gewährleistet eine ausreichende Stabilität der Stütze und insbesondere eine gute Krafteinleitung und Kraftaufnahme in die Stütze. Geeignete Materialien für die Stütze können beispielsweise Holz oder Holzverbundwerkstoffe oder andere geeignete Verbundwerkstoffe wie beispielsweise WPC (Wood Polymer Composite) sein. In diesem Falle werden dann die Ausnehmungen in die Stütze eingebracht beispielsweise ausgefräst.

Vorzugsweise ist beim Containerstausystem die wenigstens eine Stütze bzw. zwei Stützen mehrteilig ausgebildet.

Dabei können beispielsweise zwei Seitenwangen vorgesehen sein, zwischen denen das jeweils plattenförmig oder anders geeignete ausgestaltete Auflagerelement eingebracht wird. Im Falle von mehreren Auflagerelementen, bildet sich die jeweilige Ausnehmung automatisch zwischen zwei Auflagerelementen. Alternativ kann auch eine Blende zwischen den Seitenwangen eingesetzt sein, so dass die Ausnehmung auch nach oben bzw. nach unten begrenzt ist.

Vorzugsweise umfassen die zwei Stützen des Containerstausystems wenigstens zwei Seitenwangen, zwischen denen wenigstens ein Auflagerelement einsetzbar bzw. eingesetzt ist, wobei das wenigstens eine Auflagerelement ein unteres Ende der wenigstens einen Ausnehmung festlegt.

Da ein solches Auflagerelement variabel zwischen den beiden Seitenwangen einbringbar ist, erhöht sich so die Flexibilität der Ausgestaltung der jeweiligen Stützen und damit auch die Flexibilität des Containerstausystems insgesamt, so dass insbesondere speziellen Kundenwünschen entsprochen werden kann.

Das Auflagerelement dient zur Auflage des wenigstens einen Querriegels und ist derart zwischen den Seitenwangen angeordnet, dass das Auflagerelement zum Containerinnenraum ausgerichtet ist.

Vorzugsweise weisen beim Containerstausystem die wenigstens eine oder zwei Stützen ein im Wesentlichen U-förmiges Querschnittsprofil auf.

Die geschlossene Seite des Us weist dann bevorzugt in den Containerinnenraum, wohingegen die offene des Us zur Anlage an die jeweilige Sicke im Container ausgelegt ist. Beim Containerstausystem ist wenigstens ein Sicherungselement in jeder Stütze zur jeweiligen Sicherung des wenigstens einen Querriegels vorgesehen.

Ein solches Sicherungselement, gewährleistet eine ausreichende Stabilität des Gesamtsystems auch für den Fall, dass der Container Transportbewegungen ausgesetzt ist und dadurch auch Kräfte über das Beförderungsgut auf das Containerstausystem wirken. Dies verhindert ein Verschieben der Einzelelemente des Containersystems und gewährleistet so eine ausreichende Stabilität.

Vorzugsweise ist beim Containerstausystem das wenigstens eine Sicherungselement zur Sicherung wenigstens eines Querriegels als ein sogenanntes Distanzhalteelement ausgebildet, das oberhalb eines Auflagerelements an der gegenüberliegenden Seite der Stütze ausgebildet und angeordnet ist.

Bevorzugt ist das Distanzelement dabei zur Containerwand hin ausgerichtet, wenn die Stütze in die jeweilige Sicke im Container eingesetzt ist. Der Distanzhalter zur Sicherung stabilisiert die jeweilige Querstrebe bzw. den Querriegel in der jeweiligen Ausnehmung der jeweiligen Stütze. Zusätzlich übt der Distanzhalter bzw. das Distanzhalteelement eine die Stütze stabilisierende Wirkung aus. Insbesondere kann das Distanzhalteelement als plattenförmiger Einsatz zwischen zwei Seitenwangen einer mehrteiligen Stütze eingesetzt sein. Alternativ kann das Distanzhalteelement in eine einstückige Stütze ausgefräst oder anders maschinell ausgearbeitet werden.

Zusätzlich dient das Distanzhalteelement als Aushängesicherung für den jeweiligen Querriegel bzw. Querbalken. Beim Einsetzen eines Querriegels in die jeweilige Stütze bzw. deren Ausnehmung klickt der jeweilige Querbalken leicht bzw. geringfügig ein. Das heißt mit anderen Worten, dass das jeweilige Distanzhalteelement derart ausgebildet ist, dass ein eingesetzter Querriegel sich nicht selbsttätig nach oben aus der Ausnehmung bewegen kann. Um bei der Demontage des Containerstausystems den Querriegel an der jeweiligen Aushängesicherung bzw. dem Distanzhalteelement vorbeizuführen, werden der jeweilige Querriegel und die jeweiligen Stütze gegeneinander verschoben, so dass der Querriegel den Widerstand des jeweiligen Distanzhalteelementes überwinden kann. Bei der Demontage rutscht dann der jeweilige Querriegel über die Kante des hinteren Distanzelementes und kann somit nach oben herausgeschwenkt werden.

Vorzugsweise umfasst das Containerstausystem als wenigstens ein Sicherungselement zur Sicherung des wenigstens einen Querriegels ein elastisches Element.

Als elastisches Element kann beispielsweise eine Einrastfeder oder ein sonstiges Federelement vorgesehen sein, das derart in der jeweiligen Stütze angeordnet ist, dass sie eine unbeabsichtigte Demontage der jeweiligen Querriegel nach oben verhindert. Zur Entnahme wird die jeweilige Einrastfeder beispielsweise in die Seitenwange der jeweiligen Stütze hineingedrückt, so dass der jeweilige Querriegel nach oben herausgeschwenkt werden kann. Beim Einschwenken des jeweiligen Querriegels in die jeweilige Ausnehmung lassen sich solche Federelemente entweder manuell oder aber über das Gewicht des Querriegels zur jeweiligen Seitenwange hin eindrücken, so dass der jeweilige Querriegel widerstandsfrei daran vorbei gleitet.

Vorzugsweise umfasst das Containerstausystem wenigstens zwei Stützen, die derart ausgebildet sind, dass sie wahlweise mit deren jeweiliger Vorderseite oder Rückseite und/oder vertikal gedreht in eine jeweilige Sicke einsetzbar sind, wobei die Ausnehmungen, Auflagerelemente und/oder Sicherungselemente derart angeordnet oder ausgebildet sind, dass die Vorderseite und Rückseite der jeweiligen Stütze eine unterschiedliche Anzahl von Ausnehmungen mit jeweils wenigstens einem Auflagerelement aufweisen.

Die einzelnen Auflagerelemente und Distanzstücke sind dabei derart angeordnet, dass bei einem Umdrehen der Stütze sowohl vertikal als auch horizontal eine andere Anzahl und/oder Höhe der jeweiligen Auflager vorgesehen ist. Vorteilhaft erhöht dies weiter die Flexibilität und die Einsetzbarkeit insbesondere die Anpassbarkeit des Containerstausystems an das Beförderungsgut. Das Containerstausystem umfasst die wenigstens eine Ausnehmung und das wenigstens eine Auflagerelement an jeder Seite der jeweiligen Stütze.

Dabei ist die jeweilige Ausnehmung an jeder Seite der Stütze ausgebildet bzw. angeordnet. Um eine ausreichende Querschnittsfläche der jeweiligen Stütze zu erreichen, vergrößert sich der Gesamtquerschnitt der jeweiligen Stütze, so dass diese im Wesentlichen bevorzugt quadratisch ausgebildet ist. Eine solche Stütze kann zwar einen größeren Überstand in den Containerinnenraum aufweisen, der die Nutzbreite innerhalb des Containers verringert. Jedoch erhöht eine solche Stütze die Flexibilität, da die jeweiligen Ausnehmungen und Auflagerelemente derart ausgebildet und angeordnet sein können, dass zahlreiche Varianten und Anordnungsmöglichkeiten entstehen, die an das jeweilige Beförderungsgut anpassbar sind.

Vorzugsweise entspricht beim Containerstausystem die Länge des wenigstens einen Querriegels teilweise oder nahezu vollständig der Innenquerschnittsabmessung eines Containers.

Dadurch lässt sich ein aufwendiges Einspannen des jeweiligen Querriegels in den Container vermeiden. Das Spiel des Querriegels zu den Containerseitenwänden, erhöht die Anpassbarkeit des Systems an die Bedingungen im Container und ermöglicht einen spannungsfreien Einsatz. Beim Containerstausystem ist der wenigstens eine Querriegel im montierten Zustand auf den wenigstens zwei Auflagerelementen der seitlichen Stützen horizontal aufgelegt und wird so von den Auflagerelementen abgestützt.

Dies gewährleistet eine gleichmäßige Anordnung der jeweiligen Querriegel und ermöglicht ebene Lager- und Transportflächen.

Vorzugsweise ist beim Containerstausystem an dem jeweils einen Querriegel beidseitig wenigstens eine Falzfräsung bzw. andere Ausfräsung zur Auflage auf das Auflagerelement vorgesehen. Die Ausfräsung ist derart bemessen, dass eine seitliche Anlagerfläche zum definierten Einsatz der Querriegel in die jeweilige Ausnehmung und auf dem Auflagerelement gebildet ist. Die Ausfräsung bzw. Falz ist dabei bevorzugt an der Unterseite des jeweiligen Querriegels vorgesehen, die zeitgleich die Auflagefläche auf dem jeweiligen Auflagerelement bildet. Die Abmessungen der Ausfräsung stellen sicher, dass der Querriegel in einer definierten Position innerhalb der jeweiligen Stütze und auf dem Auflagerelement einbringbar ist. Dadurch definiert sich auch der lichte Abstand zwischen den Stützen. Ferner ist die Ausfräsung bevorzugt derart ausgebildet, dass sich eine Stufe an der Unterseite des jeweiligen Querriegels bildet, die ebenso als Anlagefläche gegenüber dem Auflagerelement anliegt im montierten Zustand.

Vorzugsweise ist beim Containerstausystem die Oberfläche des wenigstens einen Querriegels wenigstens teilweise rutschhemmend bearbeitet und/oder mit einem rutschhemmenden Material beschichtet.

Vorzugsweise ist beim Containerstausystem die Abmessung und Außenkontur des wenigstens einen Querriegels an die Abmessung und Außenkontur des Beförderungsgutes angepasst.

Die Querriegel können als glattes, rechteckiges Kantholz oder ähnliches Material ausgeführt sein, auf denen Platten (Holz, Karton oder Kunststoff) voll- oder teilflächig angeordnet werden können. Alternativ können die Querstreben auch an das zu verladende Gut angepasst sein, d.h. beispielsweise eine Wellenform zur Lagerung von Rundmaterial aufweisen oder eine andere entsprechende Ausgestaltung, wie beispielsweise Kammleisten, Antirutschmaterialien etc.. Die rutschhemmende Bearbeitung kann beispielsweise eine Aufrauung oder geeignete Profilierung der jeweiligen Oberfläche des Querriegels sein. Die Oberfläche des Querriegels wird dabei wenigstens teilweise bearbeitet oder angepasst, und kann auch alternativ mit einer rutschhemmenden Beschichtung, beispielsweise einem Kunststoffmaterial oder ähnlich geeignetem Material versehen sein.

Vorzugsweise umfasst das Containerstausystem wenigstens vier seitliche Stützen mit jeweils wenigstens einer Ausnehmung, wenigstens zwei Querriegeln, wobei die jeweils in die wenigstens eine Ausnehmung in den wenigstens vier Stützen eingesetzten wenigstens zwei Querriegel parallel zueinander anordenbar sind und im montierten Zustand im Container wenigstens eine zusätzliche Ebene zur Lagerung von Beförderungsgut bilden.

Mit dieser Ausgestaltung lassen sich in Abhängigkeit von der Anzahl der jeweiligen in der Höhe der jeweiligen Stützen vorgesehenen Ausnehmungen und der verwendeten Querriegel gewünschte weitere Stau- und Transportebenen in den jeweiligen Container schaffen. Dies erhöht weiter die Flexibilität des Containerstausystems und sichert den Transport und die Lagerung von zu befördernden Gütern.

Vorzugsweise umfasst das Containerstausystem weiter ein Lagerungselement, das auf den beiden wenigstens zwei Querriegeln anordenbar ist und so zusätzliche Lagerungsfläche bildet, wobei das Lagerungselement an die Konturen und Abmessungen des Beförderungsguts anpassbar ist.

Die aufgelegten Lagerungselemente bieten insbesondere in einer plattenförmigen Ausgestaltung Montageebenen, können aber auch an das Beförderungsgut angepasst sein. Vorzugsweise ist beim Containerstausystem das Lagerungselement teilweise oder vollflächig auf den beiden wenigstens zwei Querriegeln anordenbar.

Auch diese Maßnahme erhöht die Flexibilität des Containerstausystems, da beispielsweise verschiedene Beförderungsgüter unterschiedliche Abmessungen aufweisen, so dass sich einseitig ein Beförderungsgut beispielsweise über zwei oder mehr Ebenen erstreckt. Diese Flächen lassen sich so mit einfachen Mitteln aussparen und dennoch eine ausreichende Sicherung und Lagerung der jeweiligen Beförderungsgüter sicherstellen.

Vorzugsweise sind beim Containerstausystem zum Schließen von Stau- und Ladelücken innerhalb des Containers zusätzliche Querriegel und/oder Längsriegel mit den jeweiligen Stützen und/oder Querriegeln koppelbar.

Beispielsweise können dazu in den jeweiligen Stützen und/oder Querriegeln zusätzliche Ausnehmungen vorgesehen sein mit entsprechenden Auflagern, in die die weiteren Stützen und/oder Querriegel einsetzbar sind. So lassen sich beispielsweise weitere Kanthölzer oder andere Querriegel zur Sicherung beidseitig der Ladung montieren. Vorteilhaft lassen sich mit den zusätzlichen Längsriegeln die einzelnen Querriegel auch in der Containerlängsrichtung zusätzlich koppeln und/oder absichern.

Vorzugsweise sind beim Containerstausystem Sicherungsmittel und/oder Beschläge zur zusätzlichen Ladungssicherung vorgesehen.

Diese Maßnahme erleichtert beispielsweise eine Kopplung zusätzlicher Querriegel und/oder Längsriegel mit den bereits vorgesehenen Stützen und Querriegeln. Auch lassen sich so beispielsweise zusätzliches Separier- und Garniermaterial mit dem Containerstausystem und dessen Einzelkomponenten koppeln. Dadurch lässt sich die Sicherung und/oder Lagerung des jeweiligen Transportgutes bzw. Beförderungsgutes weiter verbessern.

Beispielsweise können die Querriegel zusätzlich durch Verschrauben, mit Bolzen und/oder Stiften oder anderen Befestigungselementen gesichert werden. Sofern jeweils vor dem jeweiligen Beförderungsgut und dahinter ein entsprechendes Containerstausystem eingebracht ist, lassen sich beispielsweise über die zusätzlichen Querriegel weitere Längsriegel aufschrauben oder anderweitig geeignet befestigen, beispielsweise steckbar ausführen, so dass sich im Prinzip das Containerstausystem wie bei einem Gerüst in alle Richtungen als ein Balkennetz verbreitern bzw. aufweiten lässt. Alternativ und/oder zusätzlich lässt sich das jeweilige Beförderungsgut an den jeweiligen Beschlägen sichern.

Insgesamt stellt das erfindungsgemäße Containerstausystem ein flexibles und vielseitig einsetzbares System zur Lagerung, Sicherung und Abtrennung von Beförderungsgut innerhalb eines Containers bereit. Auch lassen sich zahlreiche Transportebenen in Seecontainern oder anderen Containern bereitstellen. So lassen sich beispielsweise im Falle eines oben genannten ISO-Containers mit der Abmessung 40" ca. 40 Systeme in die jeweiligen Sicken im Trapezblech der Seitenwände einbauen. Auch lassen sich mit dem erfindungsgemäßen Containerstausystem Lade- oder Staulücken zwischen einzelnen Beförderungsgütern in einem Container schließen. Da die Anordnung der Ausnehmungen und Auflager in der jeweiligen Stütze sowie deren Anzahl variabel wählbar ist, lässt sich das Containerstausystem an das jeweilige Beförderungsgut anpassen.

### Figurenbeschreibung

Ausführungsbeispiele der Erfindung sind im Folgenden unter Bezugnahme auf die beigefügten, schematischen Zeichnungen näher erläutert. Darin zeigt:
- Fig. 1: eine Draufsicht auf einen Ausschnitt eines Ausführungsbeispiels eines erfindungsgemäßen Containerstausystems im montierten Zustand;
- Fig. 2: eine schematische Frontansicht des Containerstausystems aus Fig. 1;
- Fig. 3: eine perspektivische Darstellung eines Ausführungsbeispiels einer erfindungsgemäßen Stütze in einer Ansicht schräg von rechts;
- Fig. 4: eine perspektivische Darstellung eines alternativen Ausführungsbeispiels einer erfindungsgemäßen Stütze in einer Ansicht schräg von rechts;
- Fig. 5: eine Seitenansicht (Längsschnitt) eines Teilausschnitts eines alternativen Ausführungsbeispiels eines Containerstausystems mit einem Sicherungselement;
- Fig. 6: eine Draufsicht auf ein weiteres alternatives Ausführungsbeispiel einer erfindungsgemäßen Stütze im montierten Zustand;
- Fig. 7: eine Draufsicht auf ein weiteres alternatives Ausführungsbeispiel einer erfindungsgemäßen Stütze;
- Fig. 8: eine Draufsicht auf ein weiteres alternatives Ausführungsbeispiel einer erfindungsgemäßen Stütze;
- Fig. 9a: eine perspektivische Seitenansicht eines alternativen Ausführungsbeispiels einer erfindungsgemäßen Stütze für zwei Ebenen;
- Fig. 9b: eine perspektivische Seitenansicht eines alternativen Ausführungsbeispiels einer erfindungsgemäßen Stütze für drei Ebenen;
- Fig. 10: eine perspektivische Seitenansicht eines alternativen Ausführungsbeispiels einer vertikal drehbaren Kombistütze für eine bzw. zwei Ebenen schräg von vorne und von hinten;
- Fig. 11: eine perspektivische Seitenansicht eines alternativen Ausführungsbeispiels einer erfindungsgemäßen vertikal drehbaren Kombistütze für zwei bzw. drei Ebenen von vorne und von hinten;
- Fig. 12: das Ausführungsbeispiel aus Fig. 9a mit zwei eingesetzten Querriegeln in einer Seitenansicht;
- Fig. 13: eine Seitenansicht des Ausführungsbeispiels aus Fig. 9b mit eingesetzten bzw. montierbaren Querriegeln;
- Fig. 14: die Ausführungsform aus Fig. 11 mit drei Montageebenen und eingesetzten Querriegeln bei Montage in einer Seitenansicht;
- Fig. 15: die Ausführungsform aus Fig. 11 mit zwei Montageebenen und eingesetzten Querriegeln bzw. bei Montage in einer Seitenansicht;
- Fig. 16: eine Draufsicht auf ein weiteres Ausführungsbeispiel einer erfindungsgemäßen Stütze; und
- Fig. 17: eine Draufsicht auf ein weiteres Ausführungsbeispiel einer erfindungsgemäßen Stütze.

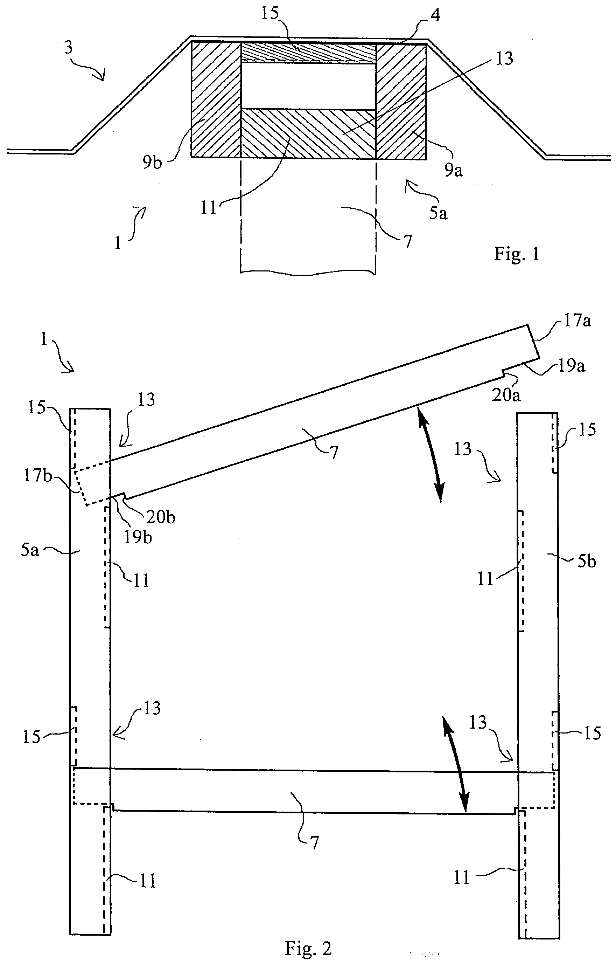

Der Aufbau und die Montage des erfindungsgemäßen Containerstausystems wird zunächst anhand der Fig. 1 und 2 beschrieben. Die weiteren Figuren zeigen jeweils alternative Ausführungsformen des Containerstausystems bzw. dessen Bestandteile.

Gemäß den Fig. 1 und 2 umfasst das Containerstausystem 1 wenigstens zwei Stützen 5a, b sowie wenigstens einen Querriegel 7. Die Stützen 5a, b werden jeweils in einem Container 3 in dessen in einer Trapezblechwand ausgebildeten jeweils gegenüberliegenden Sicken 4 hineingestellt. Die seitlichen Stege des Trapezblechs verhindern ein Verkippen der jeweiligen Stützen 5a, b. Dabei sind die Abmessungen der jeweiligen Stütze 5a, b komplementär zu der jeweiligen Sicke 4 gewählt. Dies reduziert bzw. verringert Verluste an Laderaum.

Die Stützen 5a, b umfassen jeweils zwei Seitenwangen 9a, b, zwischen denen jeweils wenigstens ein Auflagerelement 11 angeordnet ist, in Fig. 2 zwei Auflagerelemente. Bei der hier gezeigten mehrteiligen Ausgestaltung der Stützen 5a, b sind die Auflagerelemente 11 zwischen den Seitenwangen 9a, b angeordnet, beispielsweise verleimt und vernagelt. Die Auflagerelemente 11 begrenzen eine jeweils in den Stützen 5a, b vorgesehen Ausnehmung 13 nach unten. Die Ausnehmung 13 ist ausgelegt um den jeweiligen Querriegel 7 schräg von oben aufzunehmen. Im montierten Zustand bzw. eingesetzten Zustand im Container sind die jeweiligen Stützen derart angeordnet, dass das jeweilige Auflagerelement 11 zum Containerinnenraum hin ausgerichtet ist. Am oberen hinteren Ende der jeweiligen Ausnehmung 13 sind zwischen den beiden Seitenwangen 9a, b jeweils Distanzhalteelemente 15 vorgesehen, die ebenso mit den jeweiligen Seitenwangen 9a, b geeignte verbunden sind. Die Distanzhalteelemente 15 verbinden die beiden Seitenwangen 9a, b an deren hinteren Seite, die der jeweiligen Containersicke 4 gegenüberliegt. Die Distanzhalteelemente 15 erhöhen so die Stabilität der jeweiligen Stütze 5a, b.

Die Querriegel 7 umfassen jeweils zwei Enden 17a, b. An der Unterseite der Enden 17a, b sind Ausfräsungen bzw. Falze 19a, b vorgesehen. Diese Ausfräsungen 19a, b werden durch seitliche Anlageflächen 20a, b begrenzt.

Zum Einsetzen der Querriegel 7 in die jeweiligen Stützen 5a, b wird zunächst ein erstes Ende 17b in eine erste Ausnehmung 13 der ersten Stütze 5a eingefügt, derart, dass die obere Kante des Endes 17b unter dem jeweiligen Distanzhalteelement 15 eingeführt wird und der Querriegel 7 mit seiner Ausfräsung 19a bzw. 19b auf dem jeweiligen Auflagerelement 11 aufliegt.

Die Auflagerelemente 11 sowie die Distanzhalteelemente 15 sind in einer einfachen Ausgestaltung plattenförmig ausgestaltet. Beim Einsetzen des jeweiligen Querriegels 7 schräg von oben in die gegenüberliegende Ausnehmung 13 der Stütze 5b geleitet das Ende 17a am Distanzhalteelement 15 vorbei. Dabei sind die Abmessungen derart gewählt, dass der jeweilige Querriegel "einklickt", so dass das jeweilige Distanzhalteelement 15 als Aushängesicherung des jeweiligen Querriegels 7 dient. Im Anschluss liegt die zweite Ausfräsung 19a auf dem gegenüberliegenden Auflagerelement 11 auf, wobei der Querriegel 7 derart verschiebbar ist, dass die Seitenanlagefläche 20a seitlich am Auflagerelement 11 anliegt. Das gleiche gilt für die gegenüberliegende Seite und die dort vorgesehene Anlagefläche 20b, die am gegenüberliegenden Auflagerelement 11 anliegt. Der Bereich zwischen den seitlichen Anlageflächen 20a, b bestimmt also die lichte Weite des Querriegels 7.

In Fig. 2 befindet sich der untere Querriegel in der montierten Position. Dabei ist ersichtlich, dass der jeweilige Querriegel 7 von der jeweiligen Containerseitenwand beabstandet ist, also spannungsfrei montierbar ist. Diese Konstruktion der Stützen 5a, b und die Querriegel 7 führt dazu, dass die jeweiligen Systemkomponenten des Containerstausystems 1 sich gegenseitig stabilisieren. Insbesondere die Ausfräsungen 19a, 19b verhindert ein Verkippen der Stützen 5a, b nach innen. Darüber hinaus sind die jeweiligen Stützen 5a, b in der Trapezstruktur der Containerseitenwände in den Sicken 4 gehalten, was ein seitliches Verkippen der Stützen 5a, b verhindert.

Zur Demontage des Containerstausystems wird der jeweilige Querriegel 7 auf einer Seite leicht nach außen gedrückt, so dass er an seinem gegenüberliegenden Ende 17a, b an dem jeweiligen Distanzstück 15 vorbei gleiten kann. Die Entnahme erfolgt dann schräg nach oben.

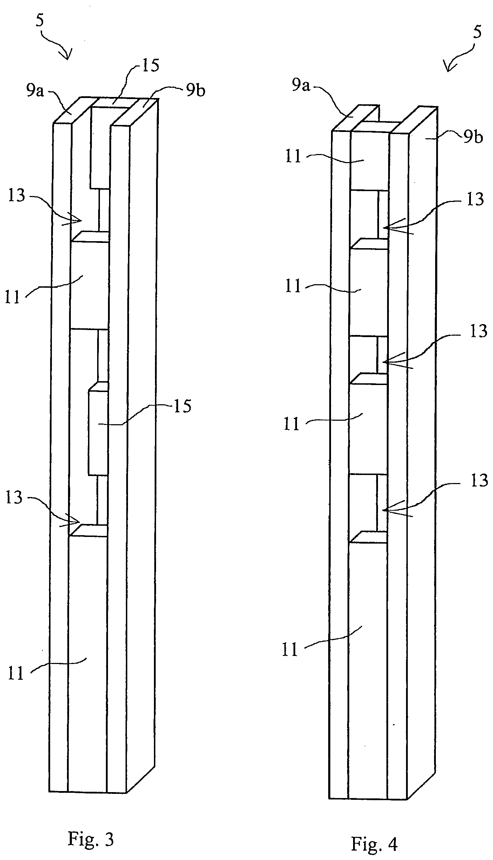

Fig. 3 zeigt die Stütze 5a, b aus Fig. 2 in einer perspektivischen Schrägansicht. Dabei sind die Ausnehmungen 13 zu erkennen, die nach unten von dem jeweiligen Auflagerelement 11 begrenzt werden.

Fig. 4 zeigt eine weitere Ausführungsform einer Stütze 5, bei der zwischen den Ausnehmungen 13 jeweils nur Auflagerelemente 11 vorgesehen sind. Die Stütze 5 weist dabei ein im Wesentlichen U-förmiges Profil auf, was ein Stapeln der jeweiligen Stützen vereinfacht. Im Prinzip sind die einzelnen Auflager 11 in Reihe gebracht. Die Ausnehmungen 13 zwischen den jeweiligen Auflagern 11 entsprechen in etwa in ihren Abmessungen dem Querschnittsmaß des jeweiligen Querriegels (nicht gezeigt). Die Querriegel lassen sich über eine Parallelverschiebung einer Stütze 5a,b einsetzen. Das heißt, die Querriegel müssen vor Montage des Containerstausystems 1 eingebracht werden, wonach die jeweiligen Stützen 5a, b in die Sicken eingesetzt werden. Eine Einbringung der Querriegel schräg von oben ist nicht möglich. Vorteilhaft entsteht jedoch beim Palettieren der Stützen weniger Volumen, da die jeweils U-förmigen Stützen ineinandergelegt werden können.

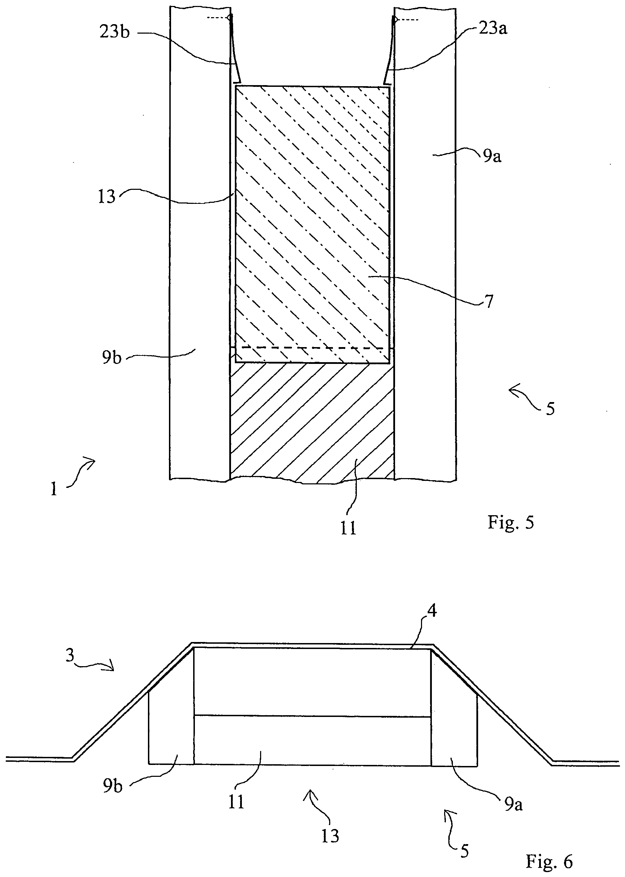

In der in Fig. 5 gezeigten Ausführungsform ist zusätzlich in den Seitenwangen 9a, b an deren Innenseite jeweils eine Sicherungsfeder 23a, b als Sicherungselement bzw. Aushängesicherung des Querriegels 7 vorgesehen. Beim Einsatz des Querriegels 7 von oben, wird die jeweilige Sicherungsfeder an die Innenseite der jeweiligen Seitenwange 9a, b gedrängt, so dass der Querriegel 7 mit seinem jeweiligen Ende daran vorbei gleiten kann. Sowie der Querriegel 7 mit seiner unteren Ausfräsung auf dem Auflager 11 aufliegt, verschwenken die jeweiligen Sicherungsfedern 23a, b in den Innenraum zwischen den Seitenwangen 9a, b und sichern den Querriegel 7 von oben gegen ein Aushängen.

Fig. 6 zeigt eine weitere Ausführungsform der erfindungsgemäßen Stütze 5 des Containerstausystems 1. Diese Stütze 5 hat einen vergrößerten Querschnitt, so dass sie dazu ausgelegt ist, größere Lasten zu tragen. Dabei sind die beiden Seitenwangen 9a, b an ihren jeweils der Containerseitenwand bzw. Sicke 4 zugewandten Enden abgeschrägt und so an die Trapezform der Containerwand angepasst. Die Länge des Auflagerelementes 11 entspricht in etwa der Breite der Sicke 4. Auch wäre es möglich, dass die Seitenwangen 9a, b die Sickenschrägen vollflächig ausfüllen. Die Breite der Ausnehmung 13 entspricht der Breite des Auflagerelementes 11 und der Sicke 4.

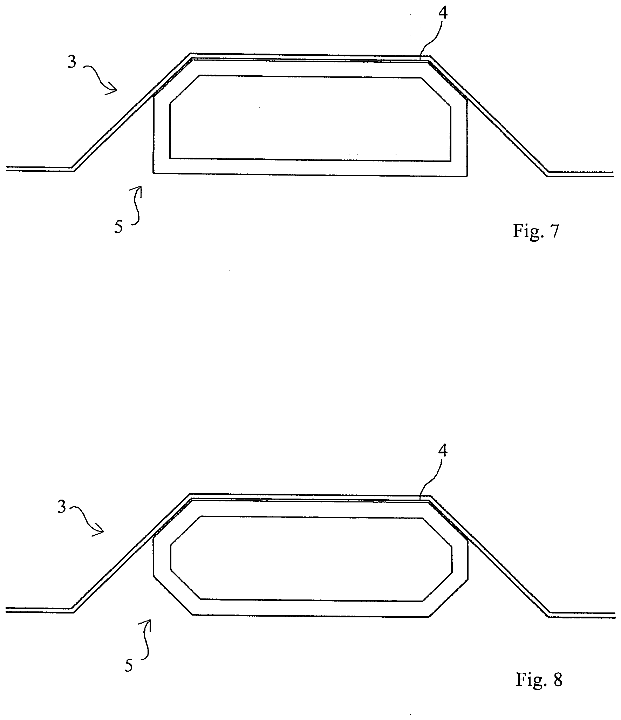

Fig. 7 und 8 zeigen zwei weitere Ausführungsformen einer Stütze 5. Die Stütze 5 ist dabei jeweils einstückig vorgesehen, d.h. sie kann aus einem geeigneten Material wie beispielsweise WPC oder einem anderen Holzkunststoffverbundmaterial hergestellt sein. Die jeweiligen Ausnehmungen 13 bzw. Auflagerelemente und Distanzhalter werden dann durch entsprechend geeignete maschinelle Bearbeitung, beispielsweise Fräsen oder ähnliches, in die jeweilige Stütze 5a, b eingearbeitet. Die Breite der jeweiligen Stütze 5a, b kann der Sicke 4 des Containers 3 entsprechen.

In Fig. 7 ist die Stütze 5 etwas breiter als in Fig. 8 ausgelegt und an ihren hinteren der Sicke 4 zugewandten Enden abgeschrägt, so dass sich insgesamt ein vergrößerter Querschnitt der Stütze 5 ergibt. In der Ausführungsform gemäß Fig. 8 sind zusätzlich auch die vorderen Ecken der Stütze 5 abgeschrägt. Dies ergibt die Möglichkeit, dass die jeweilige Stütze 5a, b beispielsweise bei entsprechend ungleichmäßiger Anordnung von Ausnehmungen, Distanzhaltern und Auflagerelementen an der Vorderseite bzw. Rückseite der Stütze 5a, b je nach Bedarf verdreht werden kann.

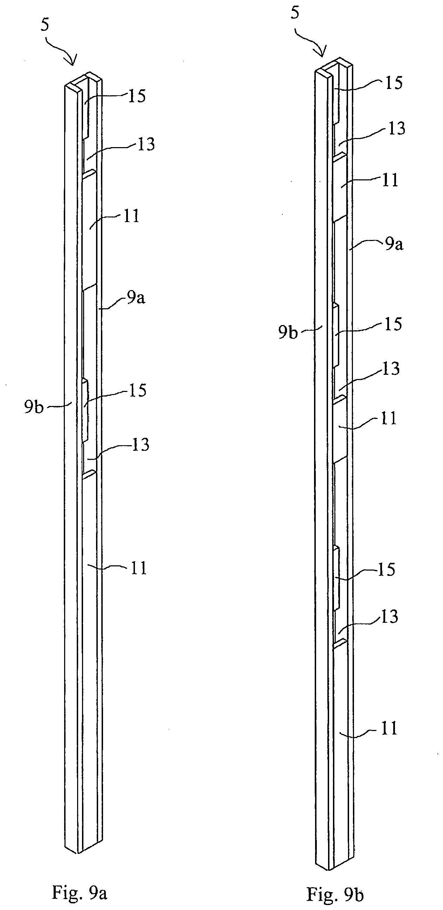

Fig. 9a bis Fig. 11 zeigen verschiedene Ausführungsformen von Stützen 5. Die Ausführungsform der Stütze 5 aus Fig. 9a zeigt dabei zwei Ausnehmungen 13 zur Aufnahme eines jeweiligen Querriegels. Somit ist diese Stütze 5 für eine Aufnahme von zwei Querriegeln ausgelegt und bei Verwendung von vier solcher Stützen zum Aufbau von zwei Ebenen in einem Container. Insgesamt lässt sich mit einer solchen Stütze der Containerinnenraum auf drei Ebenen aufteilen.

Bei der in Fig. 9b gezeigten Ausführungsform bzw. Variante der Stütze 5 sind insgesamt drei Ausnehmungen 13 vorgesehen, so dass hier insgesamt drei Querriegel entsprechend aufgenommen werden können und über die Distanzhaltestücke 15 gesichert werden. Bei Verwendung von vier solcher Stützen, lassen sich entsprechend drei zusätzliche Ebenen zur Bodenebene in einem Containerinnenraum schaffen, so dass insgesamt vier Felder bereitgestellt werden.

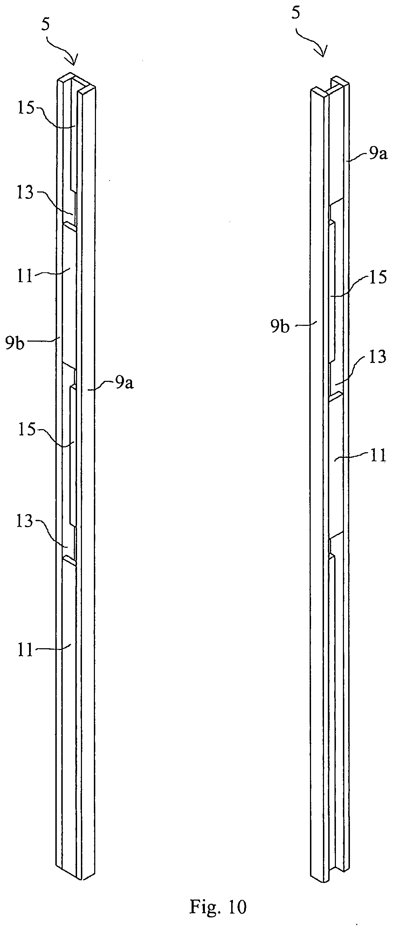

Fig. 10 zeigt eine Vorder- und Rückansicht einer weiteren Ausführungsform einer Stütze 5, die an der Vorderseite eine Ausnehmung 13 und an der Rückseite zwei Ausnehmungen 13 vorsieht, so dass diese Stütze insgesamt zur Aufnahme von einem bzw. an der Rückseite von zweien Querriegeln vorgesehen ist. Entsprechend lassen sich je nach Verwendung der Vorder- oder der Rückseite der Stütze 5 eine oder zwei zusätzliche Ebenen in einem Containerinnenraum schaffen.

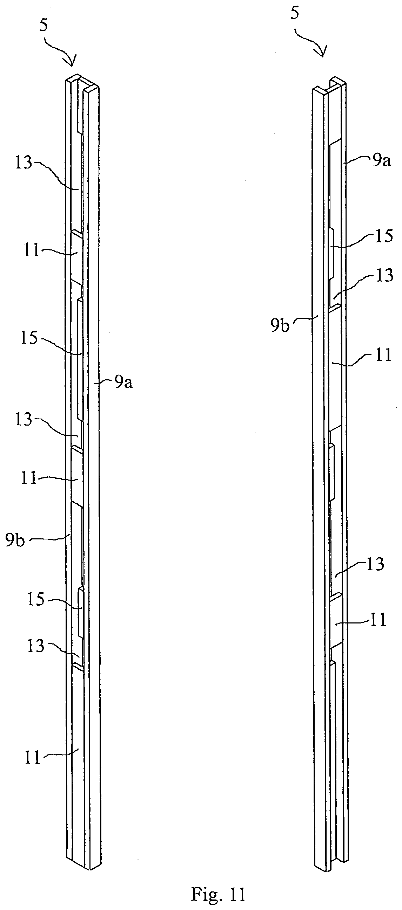

Bei der Ausführungsform gemäß Fig. 11 sind an der Vorderseite der Stütze 5 zwei Ausnehmungen 13 und an der Rückseite drei Ausnehmungen vorgesehen. Somit lässt sich durch ein einfaches Drehen der jeweiligen Stütze sowohl vertikal als auch horizontal der Container im Innenraum in unterschiedliche Anzahl von Feldern bzw. Ebenen unterteilen. Zur Sicherung der Querriegel sind entweder Distanzhalteelemente 15 als Aushängesicherung vorgesehen oder aber alternativ, wo dies konstruktiv nicht möglich sein sollte, Sicherungsfedern 23a, b.

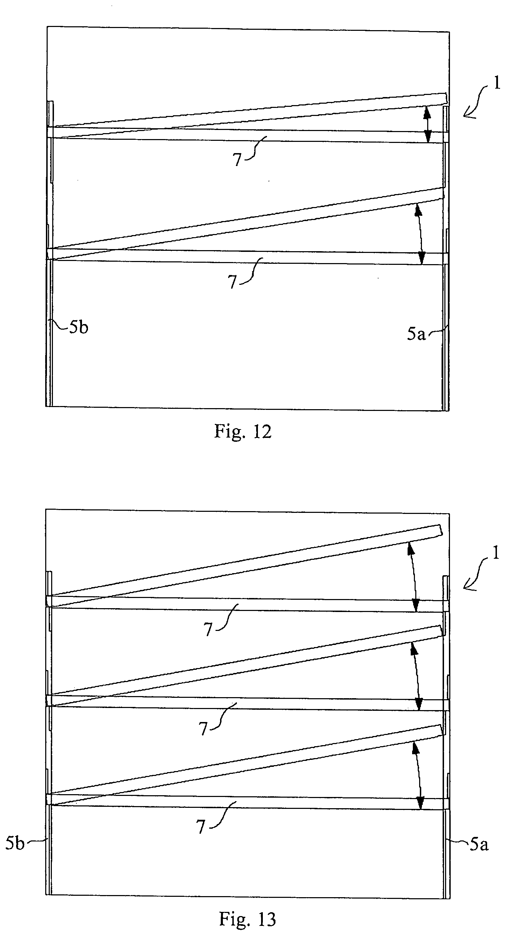

Fig. 12 und Fig. 13 zeigen jeweils ein Containerstausystem 1 bei Montage bzw. im montierten Zustand, wobei die Ausführungsform der Stützen 5a, b in Fig. 12 der Ausführungsform der Stütze 5 aus Fig. 9a entspricht und in Fig. 13 die Stützen der Ausführungsform aus Fig. 9b entsprechen. So sind gemäß Fig. 12 zwei Ebenen und insgesamt drei Felder im Containerinnenraum möglich und gemäß Fig. 13 drei Ebenen bzw. vier Felder.

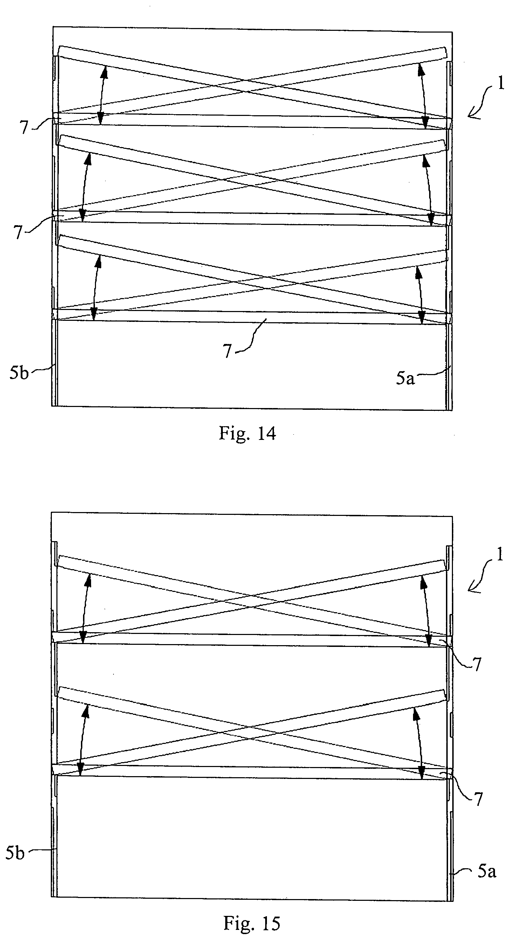

Fig. 14 und 15 zeigen jeweils Containerstausysteme, die die Stützen gemäß Fig. 11 verwenden. In Fig. 14 wird jeweils die Vorderseite der Stütze zur Ausrichtung in den Containerinnenraum verwendet, so dass Querriegel 7 in drei Ebenen einsetzbar bzw. eingesetzt sind. In Fig. 15 sind die jeweiligen Stützen 5a, b entsprechend umgedreht, so dass die auf der Rückseite der Stütze 5 aus Fig. 11 vorgesehenen Varianten mit zwei Ausnehmungen 13 zur Aufnahme zweier Querriegel Verwendung findet.

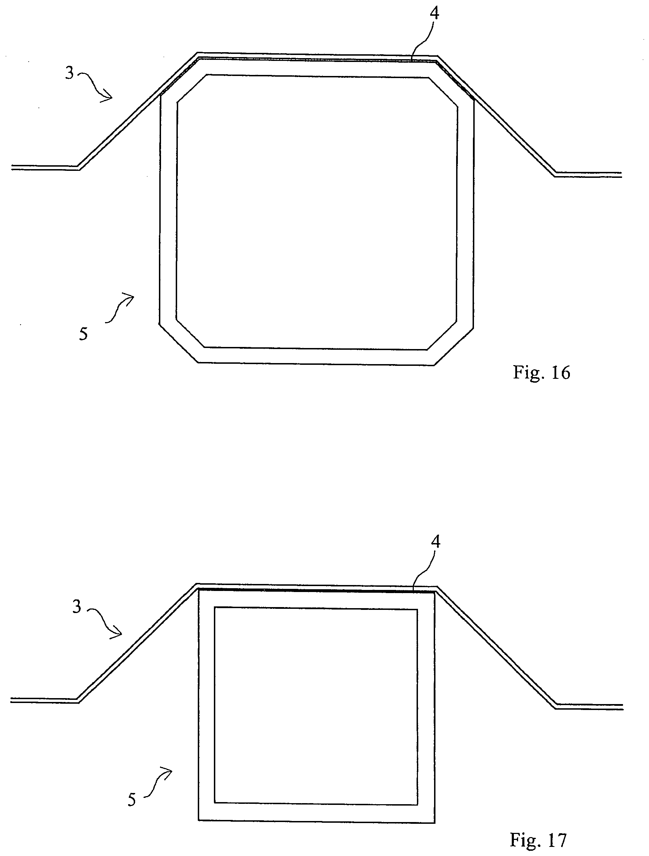

Fig. 16 und 17 zeigen schließlich zwei weitere Ausführungsformen von erfindungsgemäßen Stützen 5. Diese sind ebenso wie die Ausführungsformen in den Fig. 6 bis 8 mit einem insgesamt größeren Stützenquerschnitt vorgesehen, so dass ein höherer Lastabtrag bzw. eine bessere Verteilung der Kräfte auf die Stütze 5 über eine Erhöhung der Auflager-/Druckfläche ermöglicht wird. Insgesamt kann hier der jeweilige Querriegel (nicht gezeigt) breiter ausgeführt sein, so dass eine höhere Belastung möglich ist. Zusätzlich sind die Stützen 5 jeweils in Fig. 16 und 17 mehr oder weniger quadratisch ausgebildet, so dass sie weiter in den Containerinnenraum hineinragen. Dabei handelt es sich jeweils um eine einstückige Ausgestaltung, bei der die jeweiligen Ausnehmungen bzw. Distanzhalteelemente und/oder Auflagerelemente in die jeweilige Stütze eingefräst oder anders maschinell hergestellt werden.

Die quadratische Ausgestaltung ermöglicht eine Einbringung solcher Ausnehmungen 13 an jeder Seite der jeweiligen Stütze. In Abhängigkeit von der Anzahl der ausgebildeten Ausnehmungen lässt sich so die Flexibilität weiter erhöhen, da die jeweilige Stütze 5 entsprechend drehbar ausgebildet ist und somit über die jeweils unterschiedliche Anzahl von einsetzbaren Querriegeln unterschiedliche Staumöglichkeiten bereitstellt. Bei der Variante bzw. Ausführungsform gemäß Fig. 16 sind zusätzlich noch die Außenkanten abgeschrägt, so dass sich insgesamt das Querschnittsprofil weiter vergrößern lässt.

Weitere naheliegende Ausgestaltungen der Erfindung ergeben sich für den Fachmann aus dem Rahmen der nachfolgenden angegebenen Ansprüche.

### Bezugszeichenliste

- 1: Containerstausystem
- 3: Container
- 4: Sicke
- 5a, b: Stütze
- 7: Querriegel/Strebe
- 9a, b: Seitenwange
- 11: Auflagerelement
- 13: Ausnehmung
- 15: Distanzhalteelement
- 17a, b: Enden Querriegel
- 19a, b: Ausfräsung
- 21a, b: Anlagefläche
- 23a, b: Sicherungsfeder

## Patentansprüche

1. Containerstausystem (1) zum Transport und/oder zur Sicherung von Beförderungsgut in einem Container (3) und/oder zur Unterteilung des Containers (3), wobei der Container (3) Seitenwände aus Trapezblech mit vertikalen Sicken (4) aufweist,
wobei das Containerstausystem (1) umfasst:
wenigstens zwei seitliche Stützen (5a, b), die senkrecht in wenigstens zwei gegenüberliegende Sicken (4) wenigstens zweier gegenüberliegender Seitenwände des Containers (3) anordenbar sind, wobei die Stützen (5a, b) jeweils wenigstens eine zum Innenraum des Containers (3) ausrichtbare Ausnehmung (13) zur Aufnahme eines Querriegels (7) aufweisen und in der Ausnehmung (13) wenigstens ein Auflagerelement (11) zur Abstützung des Querriegels (7) vorgesehen ist,
wenigstens einen Querriegel (7), der jeweils in die wenigstens zwei Ausnehmungen (13) in den wenigstens zwei Stützen (5a, b) einsetzbar ist und im montierten Zustand die beiden Stützen (5a, b) miteinander verbindet, wenigstens ein Sicherungselement (15, 23a, b) in jeder Stütze (5a, b) zur Sicherung des wenigstens einen Querriegels (7), wobei die wenigstens zwei Stützen (5a, b) wahlweise mit der Vorderseite oder der Rückseite und/oder vertikal gedreht in eine Sicke (4) einsetzbar sind, **dadurch gekennzeichnet, dass** die Ausnehmungen (13), Auflagerelemente (11) und/oder Sicherungselemente (15) derart angeordnet oder ausgebildet sind, dass die Vorderseite und die Rückseite eine unterschiedliche Anzahl von Ausnehmungen (13) und/oder Höhe der Ausnehmungen (13) mit jeweils wenigstens einem Auflagerelement (11) aufweisen, und das Containerstausystem (1) werkzeuglos zusammensetzbar und zerlegbar ist.

2. Containerstausystem (1) nach Anspruch 1, bei dem die Abmessungen der Stützen (5a, b) und Querriegel (7) derart geringer als die Innenabmessungen des Containers gewählt sind, dass das Containerstausystem (1) spannungslos im Container (3) montierbar ist.

3. Containerstausystem (1) nach einem der vorstehenden Ansprüche, bei dem die Außenkontur der Stützen (5a, b) wenigstens teilweise komplementär zu den Sicken (4) des Containers (3) ausgebildet ist.

4. Containerstausystem (1) nach einem der vorstehenden Ansprüche, bei dem in der Stütze (5a, b) die wenigstens eine Ausnehmung (13) durch ein Auflagerelement (11) zur Auflage eines Querriegels (7) nach unten begrenzt ist.

5. Containerstausystem (1) nach einem der vorstehenden Ansprüche, bei dem die wenigstens zwei Stützen (5a, b) einstückig ausgebildet sind.

6. Containerstausystem (1) nach einem der Ansprüche 1 bis 4, bei dem die wenigstens zwei Stützen (5a, b) mehrteilig ausgebildet sind.

7. Containerstausystem (1) nach einem der vorstehenden Ansprüche, bei dem die Oberfläche des wenigstens einen Querriegels (7) wenigstens teilweise rutschhemmend bearbeitet und/oder mit einem rutschhemmenden Material beschichtet ist.

8. Containerstausystem (1) nach einem der vorstehenden Ansprüche, bei dem am wenigstens einen Querriegel (7) beidseitig wenigstens eine Ausfräsung zur Auflage auf das Auflagerelement (11) vorgesehen ist, die derart bemessen ist, dass eine seitliche Anlagefläche zum definierten Einsatz der Querriegel (7) in die jeweilige Ausnehmung (13) und auf dem Auflagerelement (11) gebildet ist.

9. Containerstausystem (1) nach einem der vorstehenden Ansprüche, bei dem die Abmessung und Außenkontur des wenigstens einen Querriegels (7) an die Abmessung und Außenkontur des Beförderungsgut angepasst sind.

10. Containerstausystem (1) nach einem der vorstehenden Ansprüche umfassend wenigstens vier seitliche Stützen (5a,b) mit jeweils wenigstens einer Ausnehmung (13).
wenigstens zwei Querriegel (7),
wobei die jeweils in die wenigstens eine Ausnehmung (13) in den wenigstens vier Stützen (5a, b) eingesetzten, wenigstens zwei Querriegel (7) parallel zueinander anordenbar sind und im montierten Zustand im Container (3) wenigstens eine zusätzliche Ebene zur Lagerung von Beförderungsgut bilden.

11. Containerstausystem (1) nach Anspruch 10, weiter umfassend ein Lagerungselement, das auf den beiden wenigstens zwei Querriegeln (7) anordenbar ist und so zusätzliche Lagerungsfläche bildet, wobei das Lagerungselement an die Konturen und Abmessungen des Beförderungsguts anpassbar ist.

12. Containerstausystem (1) nach einem der vorstehenden Ansprüche, bei dem zur Schließung von Stau- und Ladelücken zusätzliche Querriegel und/oder Längsriegel mit den Stützen (5a, b) und/oder Querriegeln (7) koppelbar sind.

## Claims

1. Container storage system (1) for the transport and/or securing of goods delivered in a container (3) and/or for the subdividing of the container (3), wherein the container (3) has side walls of trapezoidal sheet with vertical beads (4),
wherein the container storage system (1) comprises:
at least two side supports (5a, b), which can be arranged vertically in at least two opposite beads (4) of at least two opposite side walls of the container (3), wherein the supports (5a, b) each have at least one recess (13) which can be oriented toward the inside of the container (3) to accommodate a cross bar (7) and at least one bearing element (11) is provided in the recess (13) to brace the cross bar (7),
at least one cross bar (7), which can be installed in the at least two recesses (13) in the at least two supports (5a, b) and which joins together the two supports (5a, b) in the mounted state,
at least one securing element (15. 23a, b) provided in each support (5a, b) for securing the at least one cross bar (7), wherein the at least two supports (5a, b) can be installed in a bead (4) optionally by the front side or the rear side and/or vertically rotated, **characterized in that** the recesses (13), bearing elements (11) and/or securing elements (15) are configured or arranged such that the front side and the rear side have a different number of the recesses (13) and/or height of the recesses (13) each with at least one bearing element (11) respectively, and the container storage system (1) can be assembled and disassembled without the use of tools.

2. Container storage system (1) according to claim 1, wherein the dimensions of the supports (5a, b) and cross bar (7) are chosen less than the inner dimensions of the container such that the container storage system (1) can be mounted in the container (3) free of stress.

3. Container storage system (1) according to one of the preceding claims, wherein the outer contour of the supports (5a, b) is configured at least partly complementary to the beads (4) of the container (3).

4. Container storage system (1) according to one of the preceding claims, wherein the at least one recess (13) in the support (5a, b) is bounded at the bottom by a bearing element (11) for the supporting of a cross bar (7).

5. Container storage system (1) according to one of the preceding claims, wherein the at least two supports (5a, b) are configured as a single piece.

6. Container storage system (1) according to one of claims 1 to 4, wherein the at least two supports (5a, b) are configured as multiple piece.

7. Container storage system (1) according to one of the preceding claims, wherein the surface of the at least one cross bar (7) is at least partly antislip treated and/or coated with an antislip material.

8. Container storage system (1) according to one of the preceding claims, wherein at least one milled groove is provided on either side on at least one cross bar (7) for support on the bearing element (11), being dimensioned such that a lateral bearing surface is formed for the defined insertion of the cross bar (7) into the respective recess (13) and on the bearing element (11).

9. Container storage system (1) according to one of the preceding claims, wherein the dimensioning and outer contour of the at least one cross bar (7) are adapted to the dimensioning and outer contour of the cargo.

10. Container storage system (1) according to one of the preceding claims comprising
at least four side supports (5a,b) each with at least one recess (13).
at least two cross bars (7),
wherein the at least two cross bars (7) which can each be inserted in the at least one recess (13) in the at least four supports (5a, b) can be arranged parallel to each other and in the assembled state form at least one additional level for storage of cargo in the container (3).

11. Container storage system (1) according to claim 10, further comprising a storage element, which can be arranged on both of the at least two cross bars (7) and thus forms an additional storage surface, wherein the storage element can be adapted to the contours and dimensions of the cargo.

12. Container storage system (1) according to one of the preceding claims, wherein additional cross bars and/or lengthwise bars can be coupled with the supports (5a, b) and/or cross bars (7) in order to close up stowage and loading gaps.

## Revendications

1. Système de rangement de conteneurs (1) servant à transporter et/ou à bloquer des articles à transporter dans un conteneur (3) et/ou servant à diviser le conteneur (3), le conteneur (3) comportant des parois latérales fabriquées à partir d'une tôle à ondes trapézoïdales dotée de moulures (4) verticales,
le système de rangement de conteneurs (1) comprenant :
au moins deux montants (5a, 5b) latéraux, qui peuvent être disposés de manière perpendiculaire dans au moins deux moulures (4) se faisant face d'au moins deux parois latérales se faisant face du conteneur (3), les montants (5a, 5b) comportant respectivement au moins un évidement (13) pouvant être orienté en direction de l'espace intérieur du conteneur (3), et servant à recevoir une barre transversale (7), et au moins un élément d'appui (11) servant à soutenir la barre transversale (7) étant prévu dans l'évidement (13),
au moins une barre transversale (7), qui peut être insérée dans les au moins deux montants (5a, 5b), dans les au moins deux évidements (13), et les deux montants (5a, 5b) étant reliés l'un à l'autre à l'état monté
au moins un élément de sécurisation (15, 23a, 23b) dans chaque montant (5a, 5b) pour le blocage de l'au moins une barre transversale (7),
les au moins deux montants (5a, 5b) pouvant être insérés dans une moulure (4) au choix avec la face avant ou la face arrière et/ou tournés verticalement,
**caractérisé en ce que** les évidements (13), les éléments d'appui (11) et/ou les éléments de sécurisation (15) sont disposés ou conçus pour que le côté avant et le côté arrière présentent un nombre différent d'évidements (13) et/ou des évidements (13) de hauteur différente (13) avec chacun au moins un élément d'appui (11) et le système rangement de conteneurs (1) peut être assemblé et démonté sans outil.

2. Système de rangement de conteneurs (1) selon la revendication 1, dans lequel les dimensions des montants (5a, 5b) et de la barre transversale (7) sont plus petites que les dimensions intérieures du conteneur de manière à pouvoir monter le système de rangement de conteneurs (1) sans tension dans le conteneur (3).

3. Système de rangement de conteneurs (1) selon l'une quelconque des revendications précédentes, dans lequel le contour externe des montants (5a, 5b) est complémentaire, du moins en partie, aux moulures (4) du conteneur (3).

4. Système de rangement de conteneurs (1) selon l'une quelconque des revendications précédentes, dans lequel l'au moins un évidement (13) pratiqué dans le montant (5a, 5b) est limité vers le bas par un élément d'appui (11) permettant de déposer une barre transversale (7).

5. Système de rangement de conteneurs (1) selon l'une quelconque des revendications précédentes, dans lequel les au moins deux montants (5a, 5b) sont d'un seul tenant.

6. Système de rangement de conteneurs (1) selon l'une quelconque des revendications 1 à 4, dans lequel les au moins deux montants (5a, 5b) sont en plusieurs parties.

7. Système de rangement de conteneurs (1) selon l'une quelconque des revendications précédentes, dans lequel la surface de l'au moins une barre transversale (7) est usinée de manière antidérapante, du moins en partie, et/ou revêtue d'une matière antidérapante.

8. Système de rangement de conteneurs (1) selon l'une quelconque des revendications précédentes , dans lequel au moins un fraisage est prévu des deux côtés de l'au moins une barre transversale (7) afin de la déposer sur l'élément d'appui (11), lequel fraisage est dimensionné de manière à former une surface de butée latérale pour l'insertion définie des barres transversales (7) dans l'évidement (13) respectif et sur l'élément d'appui (11).

9. Système de rangement de conteneurs (1) selon l'une quelconque des revendications précédentes, dans lequel la dimension et le contour extérieur de l'au moins une barre transversale (7) sont adaptés à la dimension et au contour extérieur des articles à transporter.

10. Système de rangement de conteneurs (1) selon l'une quelconque des revendications précédentes comprenant
au moins quatre montants latéraux (5a, 5b) comportant chacun au moins un évidement (13),
au moins deux barres transversales (7),
les au moins deux barres transversales (7) insérées chacune dans l'au moins un évidement (13) pratiqué dans les au moins quatre montants (5a, 5b) pouvant être disposées parallèlement entre elles et formant, à l'état monté dans le conteneur (3), au moins un plan supplémentaire pour le stockage de articles à transporter.

11. Système de rangement de conteneurs (1) selon la revendication 10, comprenant en outre un élément de stockage pouvant être disposé sur les au moins deux barres transversales (7) et qui forme ainsi une surface de stockage supplémentaire, l'élément de stockage pouvant être adapté aux contours et aux dimensions des articles à transporter.

12. Système de rangement de conteneurs (1) selon l'une quelconque des revendications précédentes, dans lequel des barres transversales et/ou longitudinales supplémentaires peuvent être couplées aux montants (5a, 5b) et/ou aux barres transversales (7) afin de fermer les vides de rangement ou de chargement.
